# EUROPÄISCHE PATENTSCHRIFT

(11) **EP 2 494 941 B1**
(45) Veröffentlichungstag und Bekanntmachung des Hinweises auf die Patenterteilung: **21.10.2015**
(21) Anmeldenummer: 12157948.6
(22) Anmeldetag: 02.03.2012
(51) Int. Cl.: A61C 19/02, B65D 51/26

(54) **Behälter zum Transport von zahntechnischen Gegenständen**
Container for transporting dental objects
Récipient de transport d'objets dentaires

(30) Priorität: 03.03.2011 DE 202011003519 U
(43) Veröffentlichungstag der Anmeldung: 05.09.2012
(73) Patentinhaber: Speiko - Dr. Speier GmbH, 48155 Münster (DE)
(72) Erfinder: Kreutzer, Stefan, 48165 Münster (DE)
(74) Vertreter: Patentanwälte Dörner & Kötter PartG mbB

(56) Entgegenhaltungen:
- BE-A- 501 349
- DE-A1-102006 043 131
- US-A1- 2004 043 358

## Beschreibung

Die Erfindung betrifft einen Behälter zum Transport von zahntechnischen Gegenständen bestehend aus einem Korpus, der mit einem Deckel verschließbar ist und in dem mindestens ein Kissen angeordnet ist, wobei auf der dem Korpus zugewandten Seite an dem Deckel ein Niederhalt angeordnet ist.

Bei den zahntechnischen Gegenständen der hier betrachteten Art handelt es sich um künstliche Kronen, Inlays oder Implantate, also um Gegenstände, die in zahntechnischen Laboren hergestellt werden Es handelt sich in Folge dessen um sehr kleine Gegenstände, die von dem jeweiligen zahntechnischen Labor sehr präzise hergestellt werden. Da die Kosten für die Herstellung dieser Gegenstände relativ hoch sind, was unter anderem mit dem verwendeten Materialien, beispielsweise Gold, zusammenhängt, ist eine Neuerstellung im Falle einer Zerstörung sehr teuer. Vor dem Hintergrund dieser hohen Kosten gewinnt der sichere Transport der zahntechnischen Gegenstände vom zahntechnischen Labor zu der jeweiligen Zahnarztpraxis an Bedeutung, um Transportschäden zu vermeiden. Aufgrund der geringen Größe der Gegenstände dürfen die Behältnisse eine bestimmte Größe nicht übersteigen, um einen lagesicheren Transport zu gewährleisten.

Um einen beschädigungsfreien Transport der Gegenstände zu ermöglichen sind verschiedene Vorrichtungen und Anordnungen bekannt, beispielsweise aus DE 10 2006 043 131 A1, BE 501349 A sowie den aus US 2004/043358. Zudem sind Behälter bekannt, die einen abnehmbaren Deckel aufweisen und in denen zwei Kissen angeordnet sind. Zwischen den Kissen wird der Gegenstand beim Transport gelagert. Die bekannten Behälter ermöglichen zwar in der Regel einen sicheren Transport der Gegenstände; es besteht jedoch der Nachteil, dass die Kissen eine Größe aufweisen müssen, die den Behälter vollständig ausfüllen, um ein Verrutschen zu verhindern. Dadurch bedingt sind die Kissen recht dick, was einen hohen Materialbedarf zur Folge hat. Zudem ist aufgrund der Materialfülle das Verschließen des Behälters bedienerunfreundlich.

Hier will die Erfindung Abhilfe schaffen. Der Erfindung liegt die Aufgabe zugrunde, einen Behälter zum Transport von zahntechnischen Gegenständen zu schaffen, der einen sicheren und damit beschädigungsfreien Transport der Gegenstände ermöglicht. Gemäß der Erfindung wird diese Aufgabe dadurch gelöst, dass in dem Korpus zwei Kissen angeordnet sind, die aus Schaumstoff hergestellt sind, und die Kissen eine scheibenartige Form aufweisen und einen Außendurchmesser haben, der im Wesentlichen dem Innendurchmesser des Korpus entspricht, und dass die beiden Kissen zusammen eine Höhe haben, die größer ist als der Abstand des Niederhalts zum Boden des Korpus.

Mit der Erfindung ist ein Behälter zum Transport von zahntechnischen Gegenständen geschaffen, der einen sichereren und damit zerstörungsfreien Transport ermöglicht. Der an dem Deckel vorgesehene Niederhalt bewirkt, dass die in dem Behälter vorgesehenen Kissen, zwischen die die zahntechnischen Gegenstände beim Transport gelegt sind, auf einander gepresst werden. Dadurch ist der jeweilige Gegenstand sicher zwischen den Kissen positioniert, wodurch die Gefahr einer Positionsänderung und damit möglicherweise einer Beschädigung beseitigt ist. Gleichzeitig können die Kissen eine geringere Dicke aufweisen, wodurch einerseits Material eingespart ist, andererseits die Bedienung erleichtert ist.

Vorteilhaft ist der Niederhalt von einem Zylinder gebildet, der sich rechtwinklig zum Deckel erstreckt. Der Zylinder ragt in den Innenraum des Behälters und kommt so mit den Kissen in Berührung, so dass die Lagefixierung der Kissen bewirkt ist.

Bevorzugt ist der Zylinder an den Deckel angeformt. Es besteht hierdurch die Möglichkeit, den Deckel mit dem Niederhalt in einem Arbeitsschritt beziehungsweise aus einem Material herzustellen, wodurch ein zusätzlicher Arbeitsgang durch Anbringen des Niederhalts vermieden ist. Dies führt zu einer Reduzierung der Herstellkosten des Behälters.

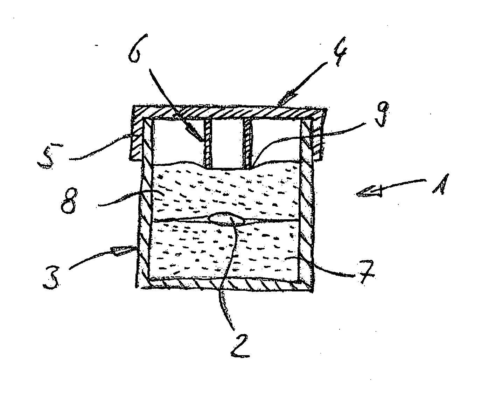

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Die einzige Figur der Zeichnung zeigt einen Schnitt durch einen Behälter zum Transport von zahntechnischen Gegenständen.

Der als Ausführungsbeispiel gewählte Behälter 1 dient zum Transport von zahntechnischen Gegenständen 2, wie beispielsweise Kronen, Implantaten, Inlays oder dergleichen. In der Zeichnung ist der zahntechnische Gegenstand dargestellt und mit "2" gekennzeichnet. Der Behälter 1 besteht aus einem Korpus 3, der eine topfartige Form aufweist. Im Ausführungsbeispiel weist der Korpus 3 einen kreisförmigen Querschnitt auf. Er ist aus durchsichtigem Kunststoff hergestellt. Die Verwendung anderer Materialien ist ebenfalls möglich.

Der Korpus 3 ist mit einem Deckel 4 verschließbar. Der Deckel 4 ist ebenfalls aus Kunststoff hergestellt. Der Deckel 4 weist einen Rand 5 auf, der in verschlossenem Zustand des Behälters 1 den dem Boden des Behälters 1 abgewandten Bereich des Korpus 3 umgibt. Im Ausführungsbeispiel ist der Innendurchmesser des Randes 5 gleich dem Außendurchmesser des dem Boden abgewandten Endes des Korpus 3. Dadurch ist der Deckel 4 auf den Korpus 3 aufsetzbar und im aufgesetzten Zustand geklemmt gehalten. In Abwandlung des Ausführungsbeispiels besteht auch die Möglichkeit, umlaufende Nuten oder Ringe an der Außenseite des Korpus 3 und/oder der Innenseite des Randes 5 vorzusehen, so dass eine Rastverbindung herstellbar ist. Auch eine Schraubverbindung zwischen Deckel und Korpus ist möglich.

An dem Deckel 4 ist auf der dem Korpus 3 zugewandten Seite ein Niederhalt 6 angeordnet. Der Niederhalt 6 ist von einem Zylinder gebildet, der sich rechtwinkelig zum Deckel 4 erstreckt. Der Zylinder 6 ist an dem Deckel 4 angeformt und somit aus demselben Material hergestellt. Im Ausführungsbeispiel ist der Zylinder 6 ein Hohlzylinder. Die Höhe des Zylinders 6 ist im Ausführungsbeispiel größer als die Breite des Randes 5. Die Höhe des Zylinders ist jedoch variabel.

In dem Korpus 3 sind zwei Kissen 7 und 8 angeordnet. Die Kissen 7, 8 sind aus Schaumstoff hergestellt. Sie weisen eine scheibenartige Form auf. Der Außendurchmesser der Kissen 7 und 8 entspricht im Wesentlichen dem Innendurchmesser des Korpus 3, so dass eine optimale Passform hervorgerufen ist. Die beiden Kissen 7, 8 haben zusammen eine Höhe, die größer ist, als der Abstand des freien Endes des Niederhalts 6 zum Boden des Korpus 3. In Folge dessen taucht der Niederhalt 6 in verschlossenem Zustand des Behälters 1 teilweise in das dem Deckel zugewandte Kissen 8 ein, wodurch eine Vertiefung 9 an der Oberfläche des Kissens 8 hervorgerufen ist.

Der erfindungsgemäße Behälter zum Transport von Inlays wird ausgeliefert in der Zusammenstellung von Korpus 3, Deckel 4 und den beiden Kissen 7 und 8. Bei der Benutzung des Behälters wird zunächst der Deckel 4 vom Korpus 3 abgenommen. Sodann wird das dem Deckel 4 zugewandte Kissen 8 aus dem Korpus 3 entnommen und der zahntechnische Gegenstand 2 auf das im Korpus 3 verbliebene Kissen 7 aufgelegt. Im Anschluss wird das entnommene Kissen 8 wieder in den Korpus 3 eingefügt, sodass der Gegenstand 2 zwischen den beiden Kissen 7 und 8 gelagert ist. Durch Aufsetzen beziehungsweise Aufschrauben des Deckels 4 tritt der Niederhalt 6 mit der dem Deckel 4 zugewandten Seite des oberen Kissens 8 in Kontakt. Hat der Deckel 4 seine Endposition auf dem Korpus 3 erreicht, taucht der Niederhalt 6 bereichsweise in das obere Kissen 8 ein und übt somit einen Druck auf das Kissen 8 aus. Eine Positionsänderung des Kissens 8 ist damit wirksam verhindert, so dass der zahntechnische Gegenstand 2 zuverlässig zwischen den beiden Kissen 7 und 8 gelagert ist. Beschädigung oder gar Zerstörungen des in dem erfindungsgemäßen Behälters angeordneten Gegenstands sind damit beim Transport wirksam verhindert.

## Patentansprüche

1. Behälter (1) zum Transport von zahntechnischen Gegenständen (2) bestehend aus einem Korpus (3), der mit einem Deckel (4) verschließbar ist und in dem mindestens ein Kissen (7, 8) angeordnet ist, wobei auf der dem Korpus (3) zugewandten Seite an dem Deckel (4) ein Niederhalt (6) angeordnet ist, **dadurch gekennzeichnet, dass** in dem Korpus (3) zwei Kissen (7, 8) angeordnet sind, die aus Schaumstoff hergestellt sind, und die Kissen (7, 8) eine scheibenartige Form aufweisen und einen Außendurchmesser haben, der im Wesentlichen dem Innendurchmesser des Korpus (3) entspricht, und dass die beiden Kissen (7, 8) zusammen eine Höhe haben, die größer ist als der Abstand des Niederhalts (6) zum Boden des Korpus (3).

2. Behälter nach Anspruch 1, **dadurch gekennzeichnet, dass** der Niederhalt (6) von einem Zylinder gebildet ist, der sich rechtwinklig zum Deckel (4) erstreckt.

3. Behälter nach Anspruch 2, **dadurch gekennzeichnet, dass** der Zylinder an den Deckel (4) angeformt ist.

4. Behälter nach einem der Ansprüche 2 oder 3, **dadurch gekennzeichnet, dass** der Zylinder ein Hohlzylinder ist.

## Claims

1. Container (1) for transporting dental objects (2), which consists of a corpus (3) closable with a lid (4) and in which at least one cushion (7, 8) is arranged, wherein at the lid (4) on the side facing the corpus (3) a hold-down device (6) is arranged, **characterised in that** in the corpus (3) two cushions (7, 8) are arranged, which are made of foam, and the cushions (7, 8) have a disc-type shape and an outer diameter which substantially corresponds to the inner diameter of the corpus (3) and that both cushions (7, 8) together have a height which is larger than the distance from the hold-down device (6) to the bottom of the corpus (3).

2. Container according to claim 1, **characterised in that** the hold-down device (6) is formed by a cylinder, which extends at right angle to the lid (4).

3. Container according to claim 2, **characterised in that** the cylinder is moulded to the lid (4).

4. Container according to one of claims 2 or 3, **characterised in that** the cylinder is a hollow cylinder.

## Revendications

1. Récipient de transport d'objets dentaires (2) comprenant un corps (3) obturable avec un couvercle (4) et dans lequel est agencé au moins un coussin (7, 8), sachant que sur le côté regardant le corps (3), un dispositif de placage (6) est agencé contre le couvercle (4),
**caractérisé en ce que** deux coussins (7, 8) fabriqués en matériau mousse sont agencés dans le corps (3), et que les coussins (7, 8) se présentent en forme de disque et ont un diamètre extérieur correspondant essentiellement au diamètre intérieur du corps (3), et **en ce que** les deux coussins (7, 8) présentent ensemble une haute supérieure à l'écart entre le dispositif de placage (6) et le fond du corps (3).

2. Récipient selon la revendication 1, **caractérisé en ce que** le dispositif de placage (6) est formé par un cylindre qui s'étend à perpendiculairement jusqu'au couvercle (4).

3. Récipient selon la revendication 2, **caractérisé en ce que** le cylindre est moulé contre le couvercle (4).

4. Récipient selon l'une des revendications précédentes 2 ou 3, **caractérisé en ce que** le cylindre est un cylindre creux.
